(19) Europäisches Patentamt
European Patent Office
Office européen des brevets

(11) **EP 4 194 957 A1**

(12) **EUROPEAN PATENT APPLICATION**
published in accordance with Art. 153(4) EPC

(43) Date of publication:
**14.06.2023 Bulletin 2023/24**

(21) Application number: **21908941.4**

(22) Date of filing: **16.11.2021**

(51) International Patent Classification (IPC):
**G03H 1/22** (2006.01) **G02B 30/00** (2020.01)

(52) Cooperative Patent Classification (CPC):
**G02B 30/56; G02B 1/007; G02B 30/00; G02B 30/30**

(86) International application number:
**PCT/CN2021/130876**

(87) International publication number:
**WO 2022/134941 (30.06.2022 Gazette 2022/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.12.2020 CN 202011552968**

(71) Applicant: **Tencent Technology (Shenzhen) Company Limited**
**Shenzhen, Guangdong 518057 (CN)**

(72) Inventors:
• **WU, Wenjie**
  **Shenzhen, Guangdong 518057 (CN)**
• **LIN, Ming-Tien**
  **Shenzhen, Guangdong 518057 (CN)**
• **CHEN, Jingzhou**
  **Shenzhen, Guangdong 518057 (CN)**
• **ZHOU, Weibiao**
  **Shenzhen, Guangdong 518057 (CN)**

(74) Representative: **Eisenführ Speiser**
**Patentanwälte Rechtsanwälte PartGmbB**
**Postfach 10 60 78**
**28060 Bremen (DE)**

(54) **DEVICE, METHOD AND APPARATUS FOR GENERATING HOLOGRAPHIC STEREOSCOPIC IMAGES, AND MEDIUM**

(57)    The present application relates to the field of holographic projections, and discloses a device, method, and apparatus for generating holographic stereoscopic images, and a medium. The device comprises: a machine body, a three-dimensional display screen, and a negative refractive index plate. The interior of the machine body comprises a first cavity and a second cavity the central axes of which have folded angles, wherein a second end of the first cavity is connected to a first end of the second cavity, and a second end of the second cavity is formed with an opening on a side wall of the machine body. The three-dimensional display screen is arranged at the first end of the first cavity, and the negative refractive index plate is arranged between the second end of the first cavity and the first end of the second cavity. The display direction of the three-dimensional display screen faces the negative refractive index plate, and the refraction direction of the negative refractive index plate faces the opening. In the present application, a three-dimensional display screen is combined with a negative refractive index plate, so that a stereoscopic image that has a three-dimensional visual effect may still be obtained from a side view of a displayed holographic stereoscopic image.

FIG. 2

## Description

This application claims priority to Chinese Patent Application No. 202011552968.7, entitled "DISPLAY DEVICE, METHOD, APPARATUS, AND MEDIUM FOR HOLOGRAPHIC STEREOSCOPIC IMAGE" and filed with the National Intellectual Property Administration, PRC on December, 24, 2020, which is incorporated herein by reference in its entirety.

## FIELD OF THE TECHNOLOGY

This disclosure relates to the field of holographic projection, and in particular, to a device, a method, an apparatus, and a medium for generating a holographic stereoscopic image.

## BACKGROUND OF THE DISCLOSURE

A stereoscopic image is a three-dimensional image having a spatial depth directly obtained by human eyes without any auxiliary device.

In the related art, the principle of holographic projection film imaging is to project a two-dimensional image onto a holographic projection film, so that a user can view the stereoscopic image through the holographic projection film.

The stereoscopic image in the foregoing art is formed through visual illusion, and the stereoscopic image displayed on the holographic projection film is essentially the two-dimensional image. When the user views the stereoscopic image from a forward direction to a side direction, the viewed stereoscopic image is to become the two-dimensional image, which destroys the stereoscopic effect of the stereoscopic image.

## SUMMARY

According to various embodiments provided in this disclosure, a device, a method, an apparatus, a controller, a computer program product, and a medium for generating a holographic stereoscopic image are provided.

A device for generating a holographic stereoscopic image is provided. The device includes a body, a three-dimensional display, and a negative refractive index plate, the body including a first cavity and a second cavity, and a bending angle existing between a central axis of the first cavity and a central axis of the second cavity; a second end of the first cavity being in communication with a first end of the second cavity, and an opening being formed by a second end of the second cavity on a side wall of the body; the three-dimensional display being arranged on a first end of the first cavity, and the negative refractive index plate being arranged between the second end of the first cavity and the first end of the second cavity; and a display direction of the three-dimensional display facing the negative refractive index plate, and a refraction direction of the negative refractive index plate facing the opening.

A method for generating a holographic stereoscopic image is provided, performed by a controller. The controller is configured to control the foregoing display device, the method including: obtaining first image data corresponding to a first holographic stereoscopic image; and emitting, by means of the three-dimensional display, three-dimensional image parallel light corresponding to the first image data in the display direction, the first holographic stereoscopic image being formed at an imaging position along the refraction direction after the three-dimensional image parallel light is refracted by the negative refractive index plate.

An apparatus for generating a holographic stereoscopic image is provided, configured to control the foregoing device. The apparatus includes: an acquisition module, configured to obtain first image data corresponding to a first holographic stereoscopic image; and a control module, configured to emit, by means of the three-dimensional display, three-dimensional image parallel light corresponding to the first image data in the display direction, the first holographic stereoscopic image being formed at an imaging position along the refraction direction after the three-dimensional image parallel light is refracted by the negative refractive index plate.

A controller is provided. The controller includes a processor and a memory, the memory storing at least one instruction, the instruction being loaded and executed by the processor to implement the foregoing method for generating a holographic stereoscopic image.

A computer-readable storage medium is provided. The computer-readable storage medium stores at least one program code, the program code being loaded and executed by a processor to implement the foregoing method for generating a holographic stereoscopic image.

A computer program product or a computer program is provided. The foregoing computer program product or the computer program includes computer instructions, the computer instructions being stored in a computer-readable storage medium. A controller reads the foregoing computer instructions from the foregoing computer-readable storage medium, and the controller executes the foregoing computer instructions, to cause the foregoing display device to perform the foregoing method for generating a holographic stereoscopic image.

## BRIEF DESCRIPTION OF THE DRAWINGS

To describe the technical solutions in the embodiments of this disclosure more clearly, the following briefly introduces the accompanying drawings required for describing the embodiments. Apparently, the accompanying drawings in the following description show merely some embodiments of this disclosure, and a person of ordinary skill in the art may still derive other drawings from these accompanying drawings without creative efforts.

FIG. 1 is a schematic diagram of an appearance of a device for generating a holographic stereoscopic image according to some embodiments.

FIG. 2 is a schematic structural diagram of a device for generating a holographic stereoscopic image according to some embodiments.

FIG. 3 is a schematic diagram of a first cavity and a second cavity according to some embodiments.

FIG. 4 is a schematic structural diagram of a device for generating a holographic stereoscopic image according to some embodiments.

FIG. 5 is a schematic diagram of a first included angle and a second included angle according to some embodiments.

FIG. 6 is a flowchart of a method for generating a holographic stereoscopic image according to some embodiments.

FIG. 7 is a schematic diagram of a first holographic stereoscopic image at different angles according to some embodiments.

FIG. 8 is a holographic stereoscopic image diagram of a first holographic stereoscopic image according to some embodiments.

FIG. 9 is a holographic stereoscopic image diagram of a three-dimensional motion area according to some embodiments.

FIG. 10 is a schematic diagram of an annular diffusion image according to some embodiments.

FIG. 11 is a holographic stereoscopic image diagram of an annular diffusion image according to some embodiments.

FIG. 12 is a schematic diagram of an annular rotary image according to some embodiments.

FIG. 13 is a holographic stereoscopic image diagram of an annular rotary image according to some embodiments.

FIG. 14 is a schematic diagram of a halo according to some embodiments.

FIG. 15 is a holographic stereoscopic image diagram of a halo according to some embodiments.

FIG. 16 is a schematic diagram of a movement trajectory according to some embodiments.

FIG. 17 is a holographic stereoscopic image diagram of a movement trajectory according to some embodiments.

FIG. 18 is a schematic diagram of a dynamic stepping image according to some embodiments.

FIG. 19 is a holographic stereoscopic image diagram of a dynamic stepping image according to some embodiments.

FIG. 20 is a flowchart of a method for interacting with a holographic stereoscopic image according to some embodiments.

FIG. 21 is a schematic diagram of a gesture action according to some embodiments.

FIG. 22 is an interactive schematic diagram of a first sliding action according to some embodiments.

FIG. 23 is a holographic stereoscopic image diagram of a second sliding action according to some embodiments.

FIG. 24 is an interactive schematic diagram of a double-fist gesture action according to some embodiments.

FIG. 25 is an interactive schematic diagram of a heart-shaped finger action according to some embodiments.

FIG. 26 is a schematic structural diagram of an apparatus for generating a holographic stereoscopic image according to some embodiments.

FIG. 27 is a schematic structural diagram of a computer device according to some embodiments.

## DESCRIPTION OF EMBODIMENTS

To make objectives, technical solutions, and advantages of this disclosure clearer, the following further describes in detail implementations of this disclosure with reference to the accompanying drawings.

First, terms involved in the embodiments of this disclosure are introduced as follows.

A three-dimensional display is a display device providing a three-dimensional visual effect. The three-dimensional display may display a three-dimensional image on a three-dimensional plane through visual illusion of human eyes. According to the principle of the parallax barrier, the three-dimensional display uses a specific mask algorithm to arrange displayed images in a crossed manner, and the images are captured and observed by two eyes after passing through a specific parallax barrier. The parallax barrier accurately controls the light passing through each pixel through a grating array, which can be seen only by a right eye or a left eye. Since the right eye and the left eye view a liquid crystal display panel at different angles, images can reach the right eye or the left eye by blocking the light by using an angle difference. The two images having differences are synthesized through a brain into an image having a spatial depth and dimension information, so that the user can see the three-dimensional image.

A negative refractive index plate is a plate made of a negative refractive index material. A dielectric constant or permeability of the negative refractive index material is both negative. Before and after the light passes through the negative refractive index plate, incident light and refracted light are on a same side of a normal. In this disclosure, the three-dimensional display may emit three-dimensional parallel light, and a real image is formed at an imaging position after the three-dimensional parallel light passes through the negative refractive index plate, so that the user can view the image having the three-dimensional visual effect from any angle.

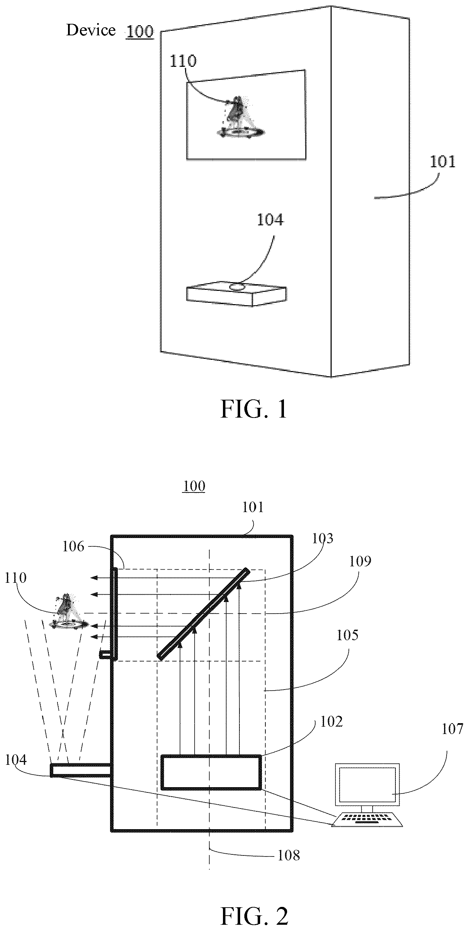

FIG. 1 is a schematic diagram of an appearance of a device for generating a holographic stereoscopic image according to some embodiments, and FIG. 2 is a schematic diagram of an internal structure of a device for generating a holographic stereoscopic image according to some embodiments. As shown in FIG. 1 and FIG. 2, the device 100 includes a body 101, a three-dimensional display 102, and a negative refractive index plate 103. The device 100 may be a display device.

The body 101 includes a first cavity 105 and a second cavity 106. A bending angle exists between a central axis of the first cavity 105 and a central axis of the second cavity 106. A second end of the first cavity 105 is in communication with a first end of the second cavity 106, and an opening is formed by a second end of the second cavity 106 on a side wall of the body 101. That is to say, an opening is formed at an area on a side wall of the body 101 which directly faces the second end 304 of the second cavity 106.

The three-dimensional display 102 is arranged on a first end of the first cavity 105, and the negative refractive index plate 103 is arranged between the second end of the first cavity 105 and the first end of the second cavity 106.

A display direction of the three-dimensional display 102 faces the negative refractive index plate 103, and a refraction direction of the negative refractive index plate 103 faces the opening.

In this embodiment, the device for generating a holographic stereoscopic image includes the body 101, the three-dimensional display 102, and the negative refractive index plate 103. The body 101 includes the first cavity 105 and the second cavity 106. A bending angle exists between a central axis of the first cavity 105 and a central axis of the second cavity 106. A second end 302 of the first cavity 105 is in communication with a first end 303 of the second cavity 106. The three-dimensional display 102 is arranged on the first end 301 of the first cavity 105, and the negative refractive index plate 103 is arranged between the second end 302 of the first cavity 105 and the first end 303 of the second cavity 106. The display direction of the three-dimensional display 102 faces the negative refractive index plate 103. Therefore, the light emitted by the three-dimensional display 102 may be refracted from the first cavity to the second cavity by the negative refractive index plate 103. However, an opening is formed by the second end 304 of the second cavity 106 on the side wall of the body 101, and the refraction direction of the negative refractive index plate 103 faces the opening, so that the refracted light can reach the opening, and the holographic stereoscopic image is formed at the imaging position of the opening, which improves the utilization of the three-dimensional display. Through the device provided in this disclosure, the holographic stereoscopic image can be automatically and quickly generated, which improves the efficiency of generating the holographic stereoscopic image, and also reducing the energy consumption for generating the holographic stereoscopic image.

In addition, the three-dimensional display 102 is combined with the negative refractive index plate 103, so that a real image can be formed at the imaging position after the three-dimensional image having the three-dimensional visual effect displayed by the three-dimensional display 102 passes through the negative refractive index plate 103, and a user can view the image having the three-dimensional visual effect at a deflected angle, which improves the imaging accuracy of the holographic stereoscopic image.

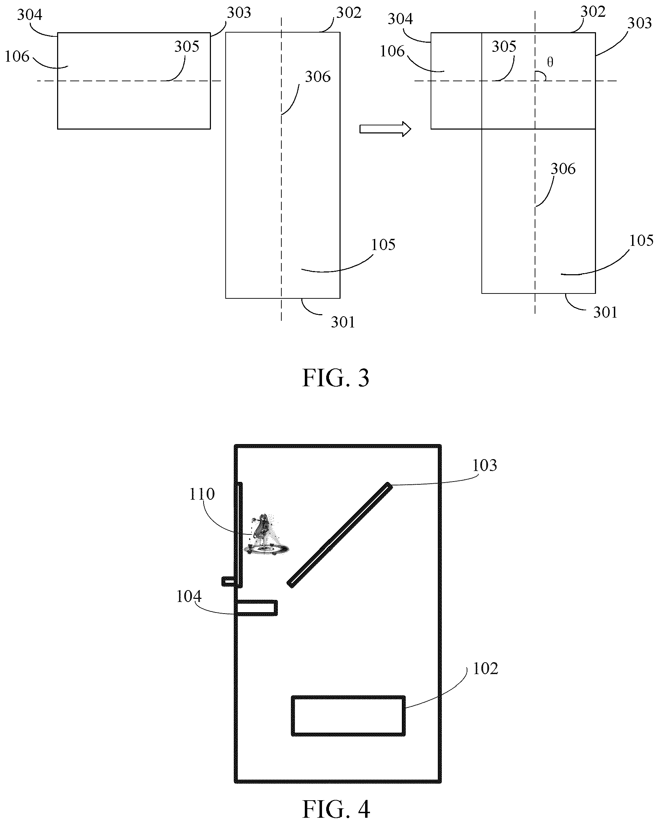

The body 101 is a housing part of the device 100. The body 101 is in a shape of a cube in appearance. Optionally, the body 101 may further be in a shape of a cylinder, a pentagonal prism, a hexagonal prism, and the like in appearance, and the appearance of the body 101 is not limited in this disclosure. The body 101 includes the first cavity 105 and the second cavity 106. As shown in FIG. 3, the first cavity 105 and the second cavity 106 are connected in a manner shown in FIG. 3. A bending angle exists between a central axis of the first cavity 105 and a central axis of the second cavity 106, and the central axis is a centerline of a cavity. As shown in FIG. 3, the bending angle between a central axis 306 of the first cavity 105 and a central axis 305 of the second cavity 106 is $\theta$, $\theta$ being equal to 90 degrees. Optionally, the bending angle $\theta$ is equal to other degrees. For example, the bending angle may be any one of 40 degrees, 80 degrees, or 120 degrees, and a magnitude of the bending angle $\theta$ is not specifically limited in this disclosure. As shown in FIG. 3, the second end 302 of the first cavity 105 is in communication with the first end 303 of the second cavity 106. An opening is formed by the second end 304 of the second cavity 106 on a side wall of the body 101. A shape of the opening may be any shape. For example, the shape of the opening may be any one of a rectangle, a circle, a triangle, or the like. The shape of the opening is not specifically limited in this disclosure. As shown in FIG. 2, a rectangular opening is formed by a left end of the second cavity 106 on the side wall of the body 101.

The three-dimensional display 102 is configured to display the three-dimensional image having the three-dimensional visual effect. The three-dimensional display 102 is arranged on the first end 301 of the first cavity 105. As shown in FIG. 2, the three-dimensional display 102 is arranged at a bottom end of the first cavity 105. The display direction of the three-dimensional display 102 may be arranged by a technician. For example, the display direction of the three-dimensional display 102 is horizontally upward, or an included angle between the display direction and a horizontal plane is 45 degrees, or the included angle between the display direction and the horizontal plane is 60 degrees. The display direction of the three-dimensional display 102 is not specifically limited in this disclosure.

The negative refractive index plate 103 is configured to refract the three-dimensional image having the three-dimensional visual effect displayed by the three-dimensional display 102, to form a real image, and the real image is displayed at the imaging position. The negative refractive index plate 103 is arranged between the second end 302 of the first cavity 105 and the first end 303 of the second cavity 106. As shown in FIG. 2, the negative refractive index plate 103 is arranged between an upper end of the first cavity 105 and a right end of the second cavity 106. A size of the negative refractive index plate 103 matches a display size of the three-dimensional display 102. For example, the size of the negative refractive index plate 103 may be larger than the display size of the three-dimensional display 102, or the size of the negative refractive index plate 103 may be equal to the display size of the three-dimensional display 102.

In some embodiments, the first cavity 105 is a first cubic cavity formed in a vertical direction. A cross-sectional size of the first cubic cavity matches the display size of the three-dimensional display 102. For example, the cross-sectional size of the first cubic cavity may be larger than or equal to the display size of the three-dimensional display 102. The second cavity 106 is a second cubic cavity formed in a transverse direction. A longitudinal section size of the second cubic cavity matches the display size of the three-dimensional display 102. For example, the longitudinal section size of the second cubic cavity may be larger than or equal to the display size of the three-dimensional display 102. An overlapping part exists between the first cavity 105 and the second cavity 106.

In this embodiment, the first cavity 105 is the first cubic cavity formed in the vertical direction, and the cross-sectional size of the first cubic cavity matches the display size of the three-dimensional display 102. In this way, three-dimensional image parallel light emitted by the three-dimensional display 102 may all pass through the negative refractive index plate 103 and can be emitted without obstructions, and a shadow presented by the three-dimensional image parallel light is complete, thereby improving the accuracy and clarity of optical imaging.

In some embodiments, the shapes of the first cavity 105 and the second cavity 106 may be any shape, the cross-sectional size of the first cavity 105 matches the display size of the three-dimensional display 102, and the longitudinal section size of the second cavity 106 matches the display size of the three-dimensional display 102. When the display of the three-dimensional display 102 is in a shape of a rectangle, a cross-section of the first cavity 105 may be a circumscribed circle of the rectangle, and the longitudinal section of the second cavity 106 may be a circumscribed circle of the rectangle.

In some embodiments, as shown in FIG. 2, an included angle between the display direction of the three-dimensional display 102 and the refraction direction of the negative refractive index plate 103 may equal to any degrees, including but not limited to any one of 90 degrees, 60 degrees, or 80 degrees. In some embodiments, the first cavity 105 is the first cubic cavity formed in the vertical direction, and the second cavity 106 is the second cubic cavity formed in the transverse direction. The included angle between the display direction of the three-dimensional display 102 and the refraction direction of the negative refractive index plate 103 is 90 degrees.

In this embodiment, the included angle between the display direction of the three-dimensional display 102 and the refraction direction of the negative refractive index plate 103 is 90 degrees. Therefore, all parallel light emitted by the three-dimensional display 102 may reach the imaging position through the second cavity 106 after being refracted by the negative refractive index plate 103, and the parallel light emitted by the three-dimensional display 102 forms a complete image at the imaging position, thereby improving the integrity and clarity of a generated optical image.

In some embodiments, a controller 107 may communicate with the three-dimensional display 102 in a wired or wireless manner. The device 100 further includes a physical display interface electrically connected to the three-dimensional display.

The electrical connection means connection by a wire or a chip pin, which is not limited in this embodiment. The three-dimensional display 102 establishes a connection with the controller 107 through the physical display interface. The controller 107 is configured to control the device 100, and the three-dimensional display 102 performs data transmission and interaction with the controller 107 through the physical display interface. The physical display interface is arranged on the controller 107, and the controller 107 may be arranged outside the body 101 or inside the body 101, which is not specifically limited in this disclosure. The connection between the controller 107 and the three-dimensional display 102 may be established in a form of a wireless network by using the physical display interface.

In this embodiment, the physical display interface is electrically connected to the three-dimensional display 102. Therefore, the three-dimensional display 102 can perform data transmission with the controller 107 through the physical display interface, the controller can control the three-dimensional display 102 to emit the parallel light to form the holographic stereoscopic image, and the three-dimensional display can be efficiently controlled by the controller, thereby improving the efficiency of generating the holographic stereoscopic image.

In some embodiments, the device 100 further includes a gesture capture camera 104. A shooting direction of the gesture capture camera 104 faces the imaging position corresponding to a refracted light of the negative refractive index plate. The gesture capture camera is configured to acquire a gesture of the user to realize the interaction between the user and the device 100. The gesture capture camera 104 has a certain capture range, the capture range including an imaging space. The imaging space includes an imaging position.

In this embodiment, since the shooting direction of the gesture capture camera 104 faces the imaging position corresponding to the refracted light of the negative refractive index plate, the gesture capture camera can capture the image at the imaging position, thereby improving the accuracy of capturing the image by the gesture capture camera.

In some embodiments, a position of the gesture capture camera 104 is determined according to the imaging position. For example, if the imaging position is outside the body, the gesture capture camera 104 is arranged outside the body, and the gesture capture camera 104 may be arranged above or below the opening. If the gesture capture camera 104 is arranged above the opening, a front side of the gesture capture camera 104 faces downward, and if the gesture capture camera 104 is arranged below the opening, the front side of the gesture capture camera 104 faces upward. In this way, the gesture capture camera can capture the image at the imaging position. As shown in FIG. 2, the imaging position is outside the body 101, and the gesture capture camera 104 is arranged outside the body 101 and below the opening. As shown in FIG. 1, the gesture capture camera 104 faces upward, so that the gesture capture camera 104 can capture the image at the imaging position.

In this embodiment, the imaging position is outside the body 101 and the gesture capture camera 104 is arranged outside the body 101, so that the gesture capture camera can capture the image at the imaging position, thereby improving the accuracy of capturing the image by the gesture capture camera.

In some embodiments, as shown in FIG. 4, the imaging position is in the second cavity 106, and the gesture capture camera 104 is arranged on a cavity wall of the second cavity 106. The gesture capture camera 104 may be arranged below or above the opening. When the gesture capture camera 104 is arranged below the opening, the gesture capture camera 104 faces upward, and when the gesture capture camera 104 is arranged above the opening, the gesture capture camera 104 faces downward. In this way, the gesture capture camera 104 can capture the image at the imaging position.

In this embodiment, the imaging position is in the second cavity 106, and the gesture capture camera 104 is arranged on the cavity wall of the second cavity 106, so that the gesture capture camera can capture the image at the imaging position, thereby improving the accuracy of capturing the image by the gesture capture camera.

In some embodiments, the device 100 further includes a physical camera interface, the physical camera interface being electrically connected to the gesture capture camera 104. The physical camera interface is configured to connect the gesture capture camera 104 to the controller 107, and the gesture capture camera 104 and the controller 107 may perform data transmission and interaction through the physical camera interface. The physical camera interface is arranged on the controller 107. The connection between the controller 107 and the gesture capture camera 104 may be established in a form of the wireless network. The physical camera interface may be at least one of a universal serial bus (USB) interface, a high definition multimedia interface (HDMI), a registered jack 45 (RJ45), a lightning interface, a firewire interface, or a custom interface.

In this embodiment, since the physical camera interface is electrically connected to the gesture capture camera 104, the controller 107 may control the gesture capture camera 104 through the physical camera interface. Therefore, the gesture capture camera 104 can be efficiently controlled to capture data, thereby improving the efficiency of capturing data.

In some embodiments, the device 100 may further include an audio device. The audio device may be arranged inside the body 101 or outside the body 101. The device 100 further includes an audio physical interface electrically connected to the audio device. The audio physical interface is configured to connect the audio device to the controller 107, and the audio device and the controller 107 may perform data transmission and interaction through the audio physical interface. The audio physical interface may be arranged on the controller 107. A connection between the audio device and the controller may be established through the wireless network. The audio physical interface may be at least one of a radio corporation of American (RCA, introduced by the Radio Corporation of American), a cannon X series, Latch, Rubber (XLR) socket, a tip, ring, sleeve (TRS) interface, a coaxial interface, an optical fiber interface, or a custom interface.

In some embodiments, the device 100 may further include a sound collection device, and the sound collection device may be arranged inside the body 101 or outside the body. The device 100 further includes a physical sound collection interface electrically connected to the sound collection device. The physical sound collection interface is configured to connect the sound collection device to the controller 107, and the sound collection device and the controller 107 may perform data transmission and interaction through the physical sound collection interface. The physical sound collection interface may be arranged on the controller 107. A connection between the audio device and the controller 107 may be established through the wireless network. The sound collection interface may be at least one of the RCA jack, the XLR socket, the TRS interface, the coaxial interface, the optical fiber interface, or the custom interface.

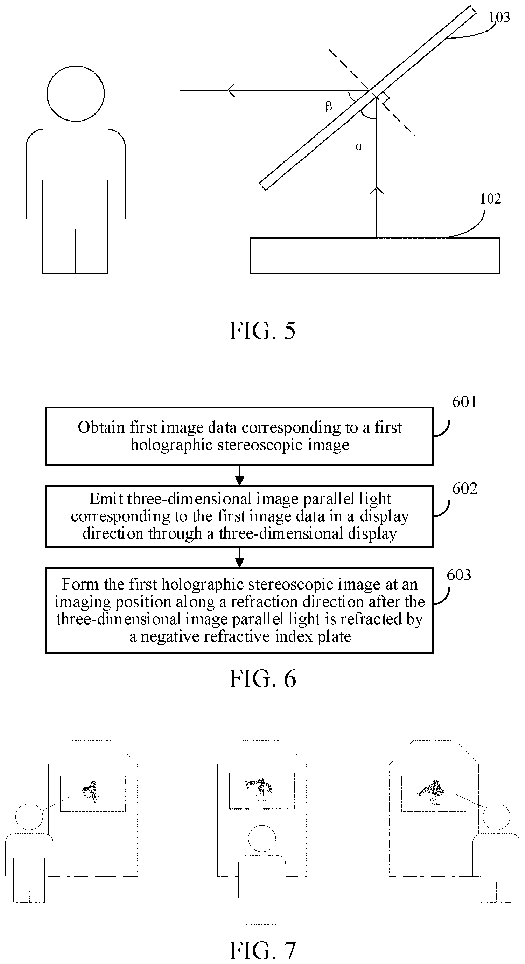

In some embodiments, an included angle between the display direction of the three-dimensional display 102 and the plate surface of the negative refractive index plate 103 is a first included angle, and an included angle between the refraction direction of the negative refractive index plate 103 and the plate surface of the negative refractive index plate 103 is a second included angle. A ratio of a cosine value of the first included angle to a cosine value of the second included angle is equal to an opposite number of a refractive index of the negative refractive index plate. As shown in FIG. 5, the included angle between the display direction of the three-dimensional display 102 and the plate surface of the negative refractive index plate is $\alpha$, an included angle between the refraction direction of the negative refractive index plate 103 and the plate surface of the negative refractive index plate 103 is $\beta$, and the refractive index of the negative refractive index plate 103 is n, which are expressed as follows:

$$n = -\frac{cos\alpha}{cos\beta}$$

The refractive index n of the negative refractive index plate is a negative number.

In this embodiment, a first holographic stereoscopic image is formed at the imaging position through the three-dimensional display 102 and the negative refractive index plate 103. The first holographic stereoscopic image viewed from a side can still present a three-dimensional visual effect, which enhances the stereoscopic effect and sense of reality of the holographic image, and breaks the barrier between the holographic image and the user.

In addition, in this embodiment, since the ratio of the cosine value of the first included angle to the cosine value of the second included angle is equal to the opposite number of the refractive index of the negative refractive index plate 103, the parallel light emitted by the three-dimensional display 102 can reach the imaging position without damage after being refracted by the negative refractive index plate, so that the first holographic stereoscopic image can be presented in the air without being blocked, which improves the imaging clarity and expands the display range of the stereoscopic image. In this way, the user can visually perceive a spatial distance and reach for the imaging position of the stereoscopic image, which enhances the stereoscopic effect and sense of reality of the holographic image, and realizes smoother and more efficient interaction between the user and the stereoscopic image.

FIG. 6 is a flowchart of a method for displaying a holographic stereoscopic image according to some embodiments. The method is implemented by a controller 107. The controller 107 is configured to control a device 100. The method includes the following steps 601 to 603.

Step 601: Obtain first image data corresponding to a first holographic stereoscopic image.

The first holographic stereoscopic image is a real image having the three-dimensional visual effect displayed by the device 100, and a user may still see an image having the three-dimensional visual effect at a deflected angle. As shown in FIG. 7, the user may still see the image having the three-dimensional visual effect at different deflected angles. During observation from a front side, the user may directly obtain the image having the three-dimensional visual effect. After deflection to the left by a certain angle for observation, the user may also directly obtain the image having the three-dimensional visual effect. After deflection to the right by a certain angle for observation, the user may also directly obtain the image having the three-dimensional visual effect.

In some embodiments, the deflected angle is positively correlated with the display size of the three-dimensional display. For example, a length-width ratio of the three-dimensional display remains unchanged at 1:1, and a larger display size of the three-dimensional display leads to a larger deflected angle.

In some embodiments, the deflected angle has a maximum angle. When the deflected angle reaches the maximum angle, with an increase in the display size of the three-dimensional display, the deflected angle remains unchanged at the maximum angle. For example, when the display size of the three-dimensional display reaches a preset size, the deflected angle reaches the maximum angle, and when the display size of the three-dimensional display is larger than the preset size, the deflected angle is kept at the maximum angle. The maximum angle of the deflected angle may be set as required. For example, the maximum angle may be 45 degrees. The preset size may be set as required. For example, the preset size may be 2m×2m. When the size of the three-dimensional display is 2m×2m, the deflected angle reaches the maximum angle of 45 degrees, and when the size of the three-dimensional display is larger than 2m×2m, the deflected angle remains unchanged at 45 degrees.

The first image data is used for displaying a three-dimensional image corresponding to the first holographic stereoscopic image on the three-dimensional display. The first image data is obtained from a three-dimensional material, and the three-dimensional material records spatial coordinate information. The three-dimensional material may include at least one of a three-dimensional model, a three-dimensional scenario, a to-be-scanned model, or a to-be-scanned scenario.

In some embodiments, there are many methods for the controller to obtain the first image data. For example, the first image data may be downloaded by the controller from the network, or the first image data may be acquired by the controller from other computer devices, or the first image data may be data locally stored by the controller.

Step 602: Emit, by means of the three-dimensional display, three-dimensional image parallel light corresponding to the first holographic stereoscopic image in a display direction.

The display direction is a direction that the three-dimensional display directly faces. As shown in FIG. 2, the display direction is upward.

The three-dimensional image parallel light is parallel light emitted by the three-dimensional display. After the three-dimensional image parallel light enters human eyes, the user sees a three-dimensional image having the three-dimensional visual effect, and the three-dimensional image is displayed behind the three-dimensional display.

Step 603: Form the first holographic stereoscopic image at an imaging position along a refraction direction after the three-dimensional image parallel light is refracted by a negative refractive index plate.

The negative refractive index plate may refract the three-dimensional image parallel light and form the first holographic stereoscopic image at the imaging position. The three-dimensional image parallel light refracted by the negative refractive index plate is not the parallel light but radial light, and extends in all directions in space.

For example, the controller displays the three-dimensional image through the three-dimensional display, the three-dimensional image is displayed behind the negative refractive index plate, and the negative refractive index plate refracts the image into the air to form a suspended and tangible real image.

A distance between the imaging position to the negative refractive index plate has a correspondence with a distance between the three-dimensional display and the negative refractive index plate. For example, the distance between the imaging position and the negative refractive index plate is equal to the distance between the three-dimensional display and the negative refractive index plate. In this embodiment, the device for generating a holographic stereoscopic image includes the body 101, the three-dimensional display 102, and the negative refractive index plate 103. The body 101 includes the first cavity 105 and the second cavity 106. A bending angle exists between a central axis of the first cavity 105 and a central axis of the second cavity 106. A second end 302 of the first cavity 105 is in communication with a first end 303 of the second cavity 106. The three-dimensional display 102 is arranged on the first end 301 of the first cavity 105, and the negative refractive index plate 103 is arranged between the second end 302 of the first cavity 105 and the first end 303 of the second cavity 106. The display direction of the three-dimensional display 102 faces the negative refractive index plate 103. Therefore, the light emitted by the three-dimensional display 102 may be refracted from the first cavity to the second cavity by the negative refractive index plate 103. However, an opening is formed by the second end 304 of the second cavity 106 on the side wall of the body 101, and the refraction direction of the negative refractive index plate 103 faces the opening, so that the refracted light can reach the opening, and the holographic stereoscopic image may be formed at the imaging position at the opening. The three-dimensional image parallel light corresponding to the first image data may be emitted by means of the three-dimensional display in the device provided in this disclosure, and the three-dimensional image parallel light corresponding to the first image data may be refracted to the imaging position by the negative refractive index plate in the device. In this way, the first holographic stereoscopic image is formed, and the holographic stereoscopic image is automatically and quickly generated, thereby improving the efficiency of generating the holographic stereoscopic image.

In some embodiments, the first image data includes three-dimensional object data and motion area display data. The controller emits, by means of the three-dimensional display, first three-dimensional image parallel light corresponding to the three-dimensional object data and second three-dimensional image parallel light corresponding to the motion area display data in the display direction. A three-dimensional object is formed at the imaging position along the refraction direction after the first three-dimensional image parallel light is refracted by the negative refractive index plate. A three-dimensional motion area is formed at the imaging position along the refraction direction after the second three-dimensional image parallel light is refracted by the negative refractive index plate.

The three-dimensional object is an object image having the three-dimensional visual effect formed at the imaging position along the refraction direction after the first three-dimensional image parallel light is refracted by the negative refractive index plate. The object may be any virtual thing, including but not limited to a virtual figure, a virtual plant, or a virtual animal. The three-dimensional object may be an object in a specific scenario. The first three-dimensional image parallel light and the second three-dimensional image parallel light are mixed together and are simultaneously emitted by the three-dimensional display.

The three-dimensional motion area is an area having the three-dimensional visual effect formed at the imaging position along the refraction direction after the second three-dimensional image parallel light is refracted by the negative refractive index plate, and is an area where the three-dimensional object moves.

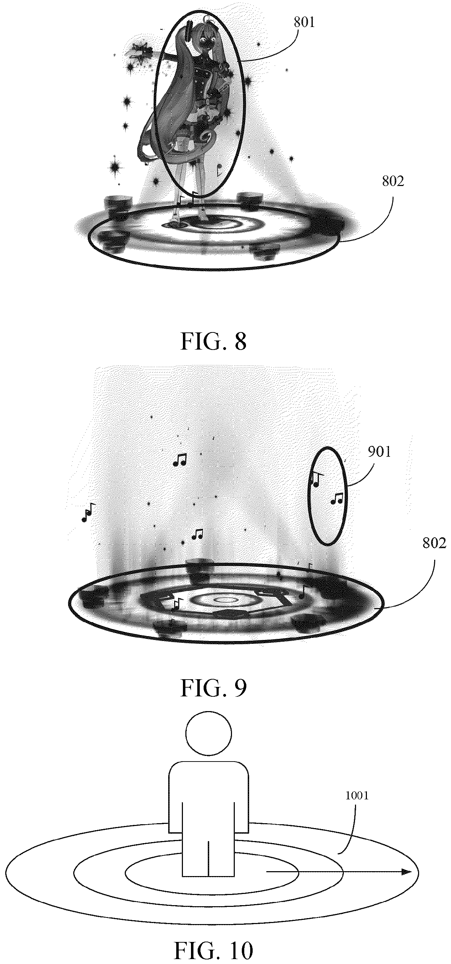

FIG. 8 is a holographic stereoscopic image diagram of a first holographic stereoscopic image according to some embodiments. A three-dimensional object 801 and a three-dimensional motion area 802 are displayed in the holographic stereoscopic image. FIG. 9 is a holographic stereoscopic image diagram of a three-dimensional motion area according to some embodiments. The holographic stereoscopic image in FIG. 9 shows the three-dimensional motion area 802.

In this embodiment, since the first image data includes three-dimensional object data and motion area display data, and the parallel light corresponding to the three-dimensional object data and the parallel light corresponding to the motion area display data are emitted, so that images corresponding to the three-dimensional object and the three-dimensional motion area can be formed at the imaging position. Since the parallel light corresponding to the three-dimensional object data and the parallel light corresponding to the motion area display data are both emitted by the three-dimensional display, different types of images may be presented by means of one three-dimensional display, which improves the efficiency of image generation.

In some embodiments, the first image data may further include suspended particle data. The suspended particle data is used for forming a semitransparent particle suspended above the three-dimensional motion area. The controller emits, by means of the three-dimensional display, third three-dimensional image parallel light corresponding to the suspended particle data in the display direction, and a semitransparent particle suspended above the three-dimensional motion area is formed at the imaging position along the refraction direction after the third three-dimensional image parallel light is refracted by the negative refractive index plate.

The semitransparent particle is a suspended and translucent particle image. A style of the semitransparent particle may be set by the technician, including but not limited to a musical note, a star, a snowflake, a bubble, and a heart.

The semitransparent particle is a particle image formed at the imaging position along the refraction direction after the third three-dimensional image parallel light is refracted by the negative refractive index plate, and the semitransparent particle is suspended above the three-dimensional motion area. The first three-dimensional image parallel light, the second three-dimensional image parallel light, and the third three-dimensional image parallel light are mixed together, and are simultaneously emitted by the three-dimensional display.

As shown in FIG. 9, a specific effect of the semitransparent particle is shown. The semitransparent particle 901 in a shape of the musical note and is suspended above the three-dimensional motion area 802.

In some embodiments, a movement trajectory of the semitransparent particle is affected by an action of the three-dimensional object. In order to simulate the impact of the action of the three-dimensional object on peripheral airflow, when the three-dimensional object moves, the movement trajectory of the semitransparent particle changes with the movement of the three-dimensional object. For example, when the three-dimensional object rotates, the semitransparent particle also moves accordingly.

In some embodiments, the semitransparent particle is affected by the action of the three-dimensional object. In order to enhance the interaction between the three-dimensional object and the semitransparent particle, when the three-dimensional object perform some actions, the image corresponding to the action is displayed. For example, when a virtual object clicks on a bubble-style semitransparent particle, an image of bubble bursting is displayed.

In some embodiments, on a premise that the device 100 carries the audio device, the shape or the style of the semitransparent particle is affected by a music melody. In order to enhance the interaction between the musical melody and the semitransparent particle, the shape or the style of the semitransparent particle is switched according to the musical melody. For example, when the audio device plays a fast melody, the semitransparent particle is in a shape of a heart. When the audio device plays a slow melody, the semitransparent particle is in a shape of a snowflake.

In this embodiment, the third three-dimensional image parallel light corresponding to the suspended particle data is emitted by means of the three-dimensional display in the display direction, and the semitransparent particle suspended above the three-dimensional motion area is formed at the imaging position along the refraction direction after the third three-dimensional image parallel light is refracted by the negative refractive index plate. The three-dimensional motion area including the semitransparent particle can highlight the stereoscopic effect, so that the stereoscopic effect and sense of reality of the holographic stereoscopic image can be enhanced, and the accuracy of determining the specific position of the three-dimensional object is improved.

In some embodiments, the first image data may further include annular diffusion data. The controller emits, by means of the three-dimensional display, fourth three-dimensional image parallel light corresponding to the suspended particle data in the display direction, and at least one of an annular diffusion image or an annular rotary image is formed at the imaging position along the refraction direction after the fourth three-dimensional image parallel light is refracted by the negative refractive index plate. When the image is a three-dimensional image, the image may also be referred to as a three-dimensional stereoscopic image.

The annular diffusion image or the annular rotary image is an image having the three-dimensional visual effect formed at the imaging position along the refraction direction after the fourth three-dimensional image parallel light is refracted by the negative refractive index plate. The fourth three-dimensional image parallel light, the first three-dimensional image parallel light, and the second three-dimensional image parallel light are mixed together and are simultaneously emitted by the three-dimensional display. The annular diffusion image and the annular rotary image may have a diffusion center, and the diffusion center may be preset or set as required. For example, the diffusion center may be set according to a virtual object. For example, an ending point of the virtual object above the three-dimensional motion area may be configured as the diffusion center.

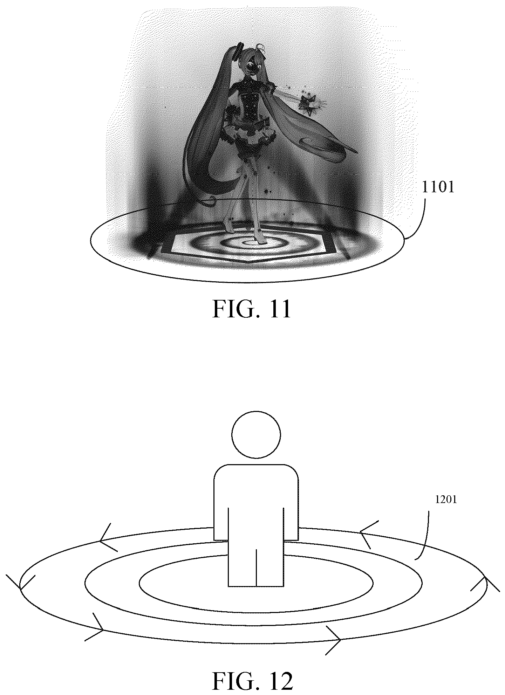

FIG. 11 is a holographic stereoscopic image diagram of an annular diffusion image according to some embodiments. FIG. 10 is a schematic diagram of an annular diffusion image according to some embodiments. The annular diffusion image 1001 diffuses outward with the ending point of the virtual object as the diffusion center. FIG. 11 is a holographic stereoscopic image diagram of an annular diffusion image according to some embodiments, and the annular diffusion image 1101 is shown in FIG. 11.

In some embodiments, the annular diffusion image may be an image formed on a diffusion surface in any shape. For example, the annular diffusion image may alternatively be a diffusion image formed on the diffusion surface in a shape of a rectangle, or may be a diffusion image formed on the diffusion surface in a shape of a regular hexagon.

In some embodiments, the annular diffusion image may show uniform diffusion or variable-speed diffusion.

In some embodiments, when the device 100 is equipped with an audio device, the annular diffusion image may change the diffusion speed according to the melody of sound. When a music melody A is switched to a music melody B, the diffusion speed of the annular diffusion image is accelerated.

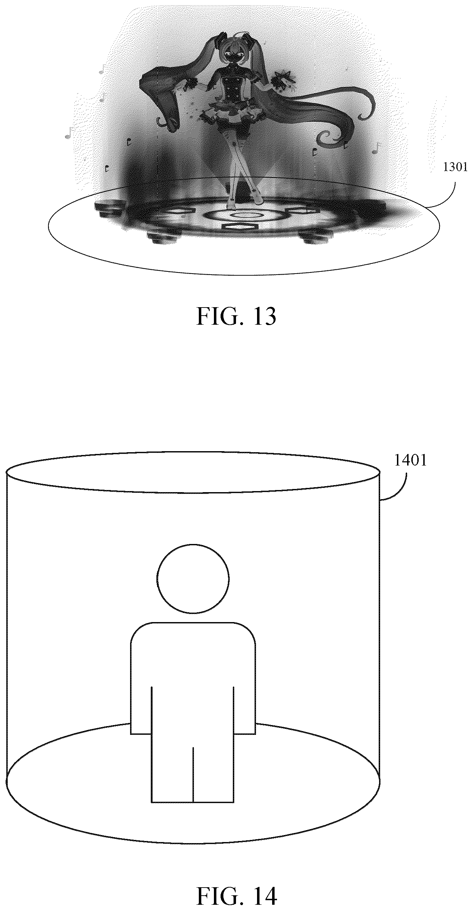

In some embodiments, the annular rotary image may be a rotary image formed on a rotary surface in any shape. For example, the annular rotary image may be a rotary image formed on a rotary surface in a shape of a rectangle, or may be a rotary image formed on a rotary surface in a shape of a regular hexagon. FIG. 12 is a schematic diagram of an annular rotary image according to some embodiments. The annular rotary image 1201 rotates with an ending point of the virtual object as a center. For the specific effect, reference may be made to the annular rotary image 1301 in the holographic stereoscopic image of the annular rotary image provided in FIG. 13. A rotation speed of the annular rotary image may be constant or variable.

In some embodiments, when the device 100 is equipped with an audio device, the annular rotary image may change the rotation speed according to the melody of sound. When a music melody A is switched to a music melody B, the rotation speed of the annular rotary image is accelerated.

In this embodiment, the fourth three-dimensional image parallel light corresponding to the annular diffusion data is emitted by means of the three-dimensional display in the display direction. At least one of the annular diffusion image or the annular rotary image is formed at the imaging position along the refraction direction after the fourth three-dimensional image parallel light is refracted by the negative refractive index plate. Therefore, the annular diffusion image and the annular rotary image can be automatically and quickly presented by using the three-dimensional display and the negative refractive index plate, which improves the efficiency of generating the holographic stereoscopic image.

In addition, the annular diffusion image and the annular rotary image with the ending point of the three-dimensional object as the center enhance the stereoscopic effect and sense of reality of the holographic stereoscopic image, which facilitates determination of the specific position of the three-dimensional object.

In some embodiments, the first image data may further include annular halo data. The controller emits, by means of the three-dimensional display, fifth three-dimensional image parallel light corresponding to the annular halo data in the display direction, and a halo is formed at the imaging position along the refraction direction after the fifth three-dimensional image parallel light is refracted by the negative refractive index plate. The halo surrounds the three-dimensional object above the three-dimensional motion area.

The halo is a halo image formed at the imaging position along the refraction direction after the fifth three-dimensional image parallel light is refracted by the negative refractive index plate. The annular halo always surrounds the three-dimensional object. The fifth three-dimensional image parallel light, the first three-dimensional image parallel light, and the second three-dimensional image parallel light are mixed together, and are simultaneously emitted by the three-dimensional display.

In some embodiments, the annular halo may be switched according to an action of a three-dimensional figure. For example, when the three-dimensional object makes a jumping action, a color of the annular halo may be switched, for example, switched from blue to green.

In some embodiments, when the device 100 is equipped with an audio device, the annular halo may change according to the melody of the sound. For example, when the music melody A is switched to the music melody B, the color of the displayed annular halo may be switched from blue to green.

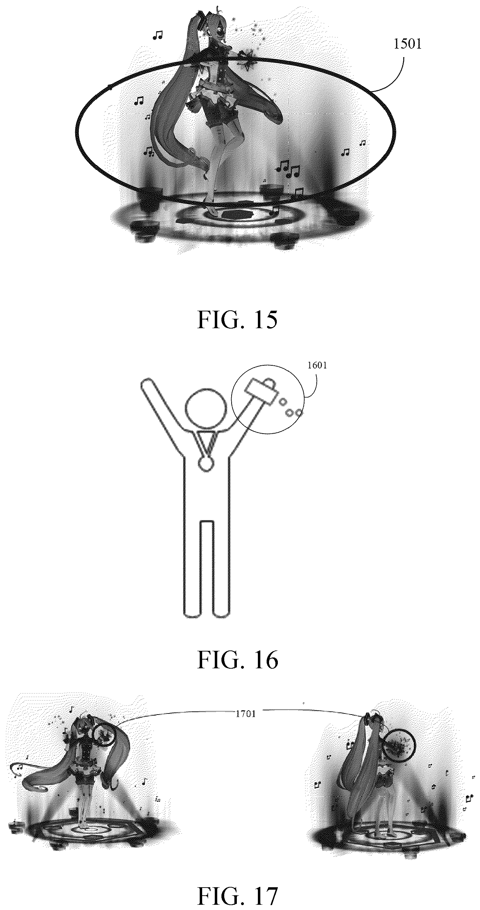

FIG. 14 is a schematic diagram of an annular halo according to some embodiments. FIG. 15 is a holographic stereoscopic image diagram of an annular halo according to some embodiments. The annular halo 1401 in FIG. 14 surrounds the three-dimensional object, and for the specific effect, reference may be made to the annular halo 1501 in FIG. 15.

In this embodiment, a halo is automatically and quickly formed at the imaging position by using the three-dimensional display and the negative refractive index plate, which improves the efficiency of generating a holographic stereoscopic image.

In addition, the halo surrounding the three-dimensional object may allow a user to easily find a moving reference object and perceive a spatial position of the three-dimensional object at all times, which enhances the stereoscopic effect and sense of reality of the holographic stereoscopic image, and facilitates determination of the specific position of the three-dimensional object.

In some embodiments, the first image data may further include particle trajectory data. The controller emits, by means of the three-dimensional display, sixth three-dimensional image parallel light corresponding to the particle trajectory data in the display direction, and a movement trajectory is formed at the imaging position along the refraction direction after the sixth three-dimensional image parallel light is refracted by the negative refractive index plate. Above the three-dimensional motion area, the movement trajectory is based on a moving part of the three-dimensional object.

The movement trajectory is a particle image formed at the imaging position along the refraction direction after the sixth three-dimensional image parallel light is refracted by the negative refractive index plate. The movement trajectory is based on the moving part of the three-dimensional object above the three-dimensional motion area. The movement trajectory is composed of moving images of suspended luminous particles, and styles of the suspended luminous particles may include at least one of a musical note, a star, a snowflake, a bubble, or a heart. The sixth three-dimensional image parallel light, the first three-dimensional image parallel light, and the second three-dimensional image parallel light are mixed together, and are simultaneously emitted by the three-dimensional display.

FIG. 16 is a schematic diagram of a movement trajectory according to some embodiments. The movement trajectory 1601 is added to a wrist of the three-dimensional object. For the specific effect, reference may be made to the movement trajectory 1701 in the holographic stereoscopic image diagram of the movement trajectory provided in FIG. 17. For example, the moving part may include at least one of a wrist, an ankle, a neck, an elbow, a knee, or hair.

In some embodiments, when the device 100 is equipped with an audio device, the movement trajectory is related to the music melody. For example, when the music melody A is switched to the music melody B, the style of the suspended luminous particle in the movement trajectory is switched from the music note to the snowflake, or the suspended luminous particle moves faster.

In this embodiment, the movement trajectory is automatically and quickly formed at the imaging position by using the three-dimensional display and the negative refractive index plate, which improves the efficiency of generating the holographic stereoscopic image.

In addition, in a case that the movement trajectory is formed on the moving part of the three-dimensional object, a spatial position change of the three-dimensional object may be recorded when the three-dimensional object makes a relatively large displacement or rotation, which enhances the stereoscopic effect and sense of reality of the holographic stereoscopic image, and facilitates determination of the specific position of the three-dimensional object.

In some embodiments, the first image data may further include dynamic stepping data. The controller emits, by means of the three-dimensional display, seventh three-dimensional image parallel light corresponding to the dynamic stepping data in the display direction, and an annular diffusion image is formed at the imaging position along the refraction direction after the seventh three-dimensional image parallel light is refracted by the negative refractive index plate. The annular diffusion image is based on a stepping position of a foot of the three-dimensional object above the three-dimensional motion area.

The annular diffusion image based on the stepping position is a diffusion image formed at the imaging position along the refraction direction after the seventh three-dimensional image parallel light is refracted by the negative refractive index plate. The seventh three-dimensional image parallel light, the first three-dimensional image parallel light, and the second three-dimensional image parallel light are mixed together, and are simultaneously emitted by the three-dimensional display.

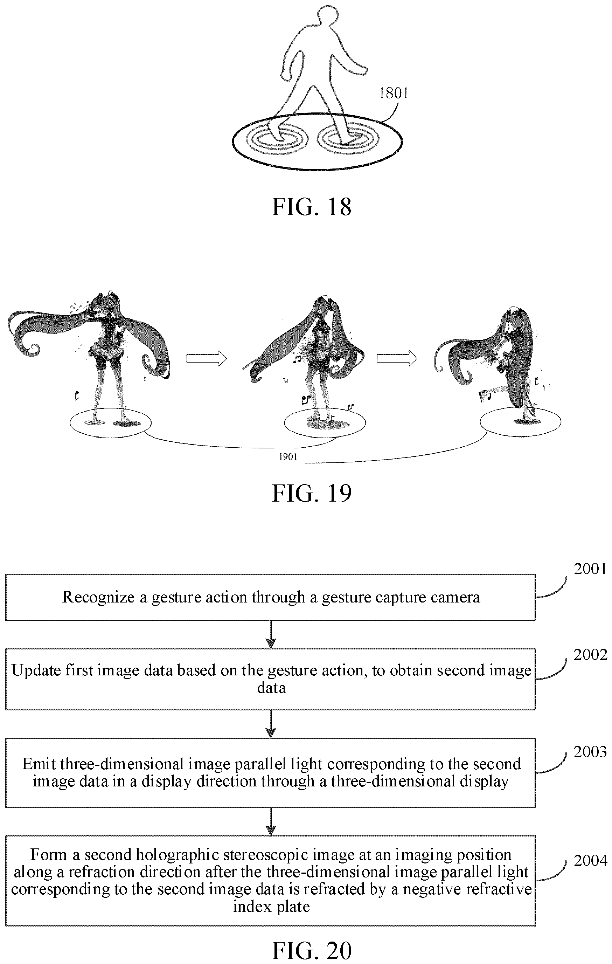

FIG. 18 is a schematic diagram of a dynamic stepping image according to some embodiments. The annular diffusion image 1801 based on the stepping position is arranged at the foot of the three-dimensional object. For the specific effect, reference may be made to the annular diffusion image 1901 in the holographic stereoscopic image of the dynamic stepping image provided in FIG. 19.

In some embodiments, in order to simulate the impact of stepping strength of the three-dimensional object on the three-dimensional motion area, the annular diffusion image based on the stepping position is related to a step amplitude of the three-dimensional object. For example, when the three-dimensional object moves at a relatively large step amplitude, there is a relatively large quantity of ripples corresponding to the annular diffusion image. Similarly, when the three-dimensional object moves at a relatively small step amplitude, there is a relatively small quantity of ripples corresponding to the annular diffusion image.

In some embodiments, the color or the style of the annular diffusion image may be changed during multiple stepping actions of the three-dimensional object. For example, during first stepping of the three-dimensional object, the corresponding annular diffusion image is blue. During second stepping of the three-dimensional object, the corresponding annular diffusion image is purple. During third stepping of the three-dimensional object, the corresponding annular diffusion image is red. For another example, during first stepping of the three-dimensional object, the corresponding annular diffusion image is a circular diffusion image. During the second stepping of the three-dimensional object, the corresponding annular diffusion image is a rectangular diffusion image. During the third stepping of the three-dimensional object, the corresponding annular diffusion image is a regular hexagonal diffusion image.

The annular diffusion image based on the stepping position of the foot of the three-dimensional object above the three-dimensional motion area can highlight the spatial displacement of the three-dimensional object in a suspended environment, and enhance the stereoscopic effect and sense of reality of the holographic stereoscopic image, which is convenient for the user to determine the specific position of the three-dimensional object.

In this embodiment, the annular diffusion image is automatically and quickly formed at the imaging position by using the three-dimensional display and the negative refractive index plate, which improves the efficiency of generating the holographic stereoscopic image.

Based on the above, in this embodiment, a first holographic stereoscopic image is formed at the imaging position by combining the three-dimensional display with the negative refractive index plate, and the first holographic stereoscopic image viewed from a side can still present a three-dimensional visual effect. This embodiment can enhance the stereoscopic effect and sense of reality of the holographic stereoscopic image, and can break the barrier between the holographic image and the user, so that the user can exactly see the first holographic stereoscopic image having the three-dimensional visual effect in a physical space.

FIG. 20 is a flowchart of a method for interacting with a holographic stereoscopic image according to some embodiments. The method is performed by a controller. The controller is configured to control the device 100 shown in FIG. 1 and FIG. 2, and the device 100 further includes a gesture capture camera. The method includes the following steps 2001 to 2004.

Step 2001: Recognize a gesture action by means of the gesture capture camera.

When the user places a hand within a capture range of the gesture capture camera, the controller recognizes the gesture action by means of the gesture capture camera. The gesture action includes at least one of a fisting action, a sliding action, a clicking/tapping action, or a heart-shaped finger action. The type of the gesture action is not specifically limited in this disclosure.

Step 2002: Update first image data based on the gesture action, to obtain second image data.

The controller updates the first image data based on the gesture action to obtain the second image data.

The second image data is used for displaying a three-dimensional image corresponding to a second holographic stereoscopic image on a three-dimensional display.

There are multiple methods for obtaining the second image data. For example, the controller downloads the second image data on the network, or the controller receives the second image data transmitted by other computer devices, or the controller calls the locally stored second image data. The method for obtaining the second image data is not specifically limited in this disclosure.

Step 2003: Emit, by means of the three-dimensional display, three-dimensional image parallel light corresponding to the second image data in a display direction.

Step 2004: Form the second holographic stereoscopic image at an imaging position along a refraction direction after the three-dimensional image parallel light corresponding to the second image data is refracted by a negative refractive index plate.

The second holographic stereoscopic image has the same characteristics as a first holographic image. The second holographic stereoscopic image is a real image having the three-dimensional visual effect displayed by the device 100, and the user may still obtain the image having the three-dimensional visual effect at a deflected angle. The deflected angle includes, but is not limited to, 30 degrees, 50 degrees, and 90 degrees. The display content of the second holographic stereoscopic image is different from the display content of the first holographic stereoscopic image.

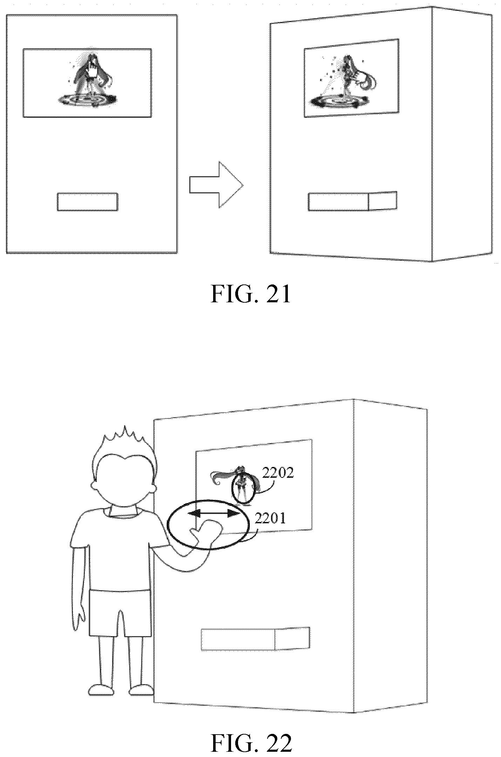

FIG. 21 is a schematic diagram of a gesture action according to some embodiments. The first holographic stereoscopic image may be viewed from different angles to obtain different stereoscopic visual effects, and the user can touch different parts of the first holographic stereoscopic image at different angles from different angles. For example, the user can touch a cheek of the three-dimensional object on the front side of the three-dimensional object, and can touch a lower abdomen of the three-dimensional object on a side of the three-dimensional object. In this embodiment, the gesture action is recognized by the gesture capture camera, and the first image data is updated based on the gesture action, to obtain the second image data. In this way, the gesture action is automatically recognized by the gesture capture camera, the image data is updated based on the recognition result, and a new image is generated by using the three-dimensional display and the negative refractive index plate. Therefore, the three-dimensional display and the negative refractive index plate are combined with the gesture capture camera, thereby improving the efficiency of updating the holographic stereoscopic image.

In some embodiments, the first image data includes a three-dimensional object, and the first gesture action is a first sliding action. The first sliding action is configured to trigger updating of clothing of the three-dimensional object.

When the controller determines that the gesture action is the first sliding action, first clothing data corresponding to the three-dimensional object in the first image data is updated to second clothing data to obtain the second image data.

The first clothing data is used for displaying a three-dimensional image corresponding to the clothing of the three-dimensional object on the three-dimensional display.

Similarly, the second clothing data is used for displaying a three-dimensional image corresponding to the clothing of the three-dimensional object on the three-dimensional display. The first clothing data is different from the second clothing data.

FIG. 22 is an interactive schematic diagram of a first sliding action according to some embodiments. When the controller determines that the gesture action is a first sliding action 2201, clothing 2201 of the three-dimensional object is changed. For example, when the controller determines that the gesture action is the first sliding action, a dress of the three-dimensional object is changed to a cowboy shirt. The first gesture action may further be at least one of a clicking/tapping action or a double clicking/tapping action. In this embodiment, the gesture action is the first sliding action, and the first sliding action is configured to trigger updating of the clothing of the three-dimensional object. Therefore, the gesture for updating the clothing of the three-dimensional object can be recognized by the gesture capture camera to update the clothing of the three-dimensional object, thereby improving the efficiency of updating the holographic stereoscopic image, and realizing smoother interaction between the user and the stereoscopic image.

In some embodiments, the first image data includes a three-dimensional object, and the first gesture action is a second sliding action. The second sliding action is configured to trigger updating of the display angle of the three-dimensional object.

When the controller determines that the gesture action is the second sliding action, a first display angle of the three-dimensional object in the first image data is updated to a second display angle along a sliding direction, to obtain second image data.

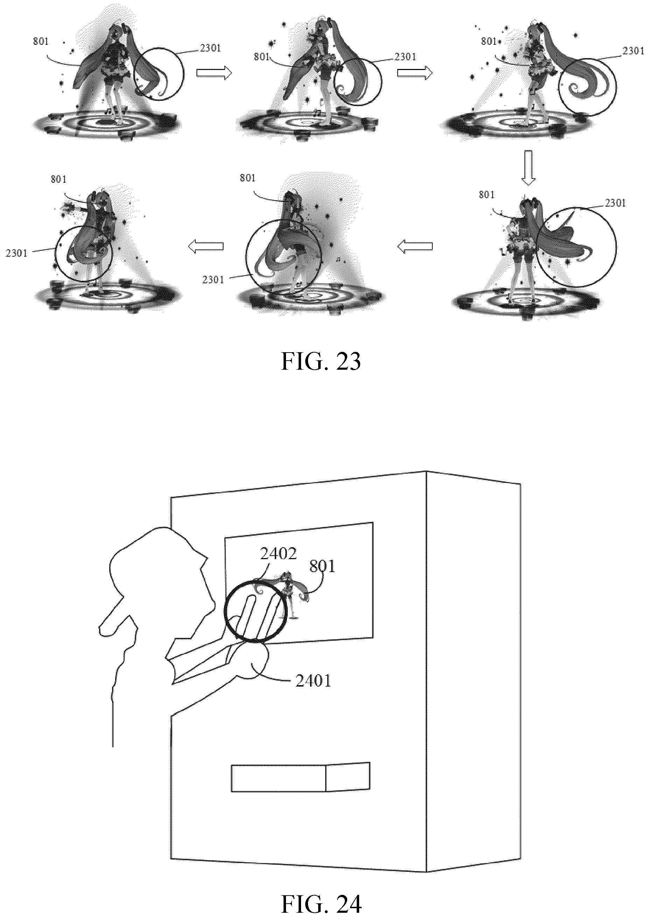

FIG. 21 is an interactive physical diagram of a second sliding action according to some embodiments. When the controller determines that the gesture action is the second sliding action, the three-dimensional object is rotated along a sliding direction. When the three-dimensional object rotates, other parts on the three-dimensional object may be driven into physical movement. As shown in FIG. 23, when a three-dimensional object 801 rotates, physical movement of hair 2301 of the three-dimensional object 801 may be displayed. When the three-dimensional object rotates, physical movement of clothing of the three-dimensional object may further be displayed.

In some embodiments, the first image data further includes motion area display data. When the controller determines that the gesture action is the second sliding action, the first display angle of the three-dimensional motion area in the motion area display data is updated to the second display angle along the sliding direction. In this embodiment, the gesture action is the second sliding action, and the second sliding action is configured to trigger updating of the display angle of the three-dimensional object. Therefore, the gesture for updating the display angle of the three-dimensional object can be recognized by the gesture capture camera to update the display angle of the three-dimensional object, thereby improving the efficiency of updating the holographic stereoscopic image, and realizing smoother interaction between the user and the stereoscopic image.

In some embodiments, the first image data includes a three-dimensional object, and the first gesture action is a double-fist gesture action.

When the controller determines that the gesture action is the double-fist gesture action, first interaction data may be added to the first image data to obtain second image data. The first interaction data is data used for indicating interaction between the three-dimensional object and an interactive object on double fists which is performed following a music melody, and is used for displaying a three-dimensional image corresponding to an interactive object on the three-dimensional display. The interactive object is an object configured to interact with the three-dimensional object, and is a virtual object. For example, the interactive object may be a light stick.

FIG. 24 is an interactive schematic diagram of a double-fist gesture action according to some embodiments. When the controller determines that the gesture action is the double-fist gesture action 2401, a light stick 2402 is presented at a palm of double fists of a user, so that the user can interact with the three-dimensional object 801 following the music melody.

In some embodiments, a color or a style of the light stick may vary with the music melody. For example, when a music melody A is switched to a music melody B, the color of the light stick is switched from red to blue.

In this embodiment, when the gesture action is the double-fist gesture action, the first interaction data is added to the first image data to obtain the second image data. Since the first interaction data is the data used for indicating interaction between the three-dimensional object and the interactive object on double fists which is performed following the music melody, smooth interaction with the three-dimensional object can be realized based on the recognized action, thereby improving the interactive effect of the holographic stereoscopic image.

In some embodiments, the first image data includes a three-dimensional object, and the first gesture action is a heart-shaped finger action. When the controller determines that the gesture action is the heart-shaped finger action, second interaction data may be added to the first image data to obtain second image data. The second interaction data is data used for indicating interaction between the three-dimensional object and a heart-shaped image, and is used for displaying a three-dimensional image corresponding to the heart-shaped image on the three-dimensional display.

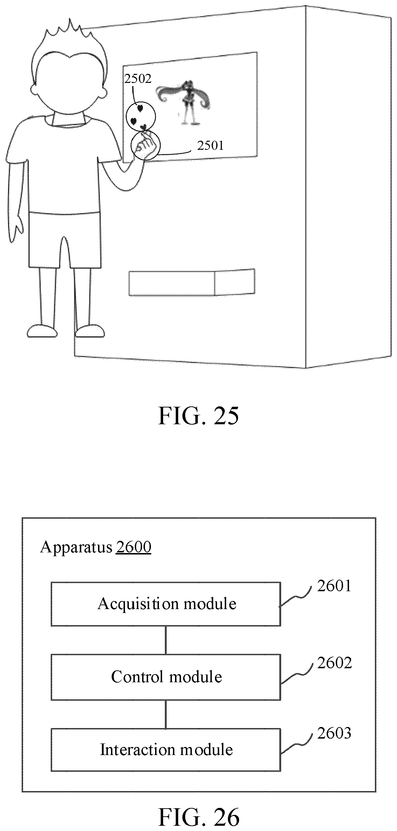

FIG. 25 is a schematic diagram of a heart-shaped finger action according to some embodiments. When the user makes a heart-shaped finger action 2501, a heart-shaped image 2502 is presented.

In some embodiments, when the controller determines that the gesture action is the heart-shaped finger action, the three-dimensional object may be controlled to make a corresponding heart-shaped finger action.

In some embodiments, the device 100 is equipped with an audio device, and the controller may control the heart-shaped image to change a movement rate of the heart according to the music melody. For example, when the music melody A is switched to the music melody B, the movement rate of the heart is accelerated.

In this embodiment, the heart-shaped image may interact with the three-dimensional object by recognizing the heart-shaped finger action, which improves the interactive effect of the holographic stereoscopic image.

FIG. 26 is a schematic structural diagram of an apparatus for generating a holographic stereoscopic image according to some embodiments. The controller may be implemented as all or a part of the device through software, hardware, or a combination of the software and the hardware. The apparatus 2600 includes an acquisition module 2601 and a control module 2602.

The acquisition module 2601 is configured to obtain first image data corresponding to a first holographic stereoscopic image.

The control module 2602 is configured to emit, by means of a three-dimensional display, three-dimensional image parallel light corresponding to first image data in a display direction, a first holographic stereoscopic image being formed at an imaging position along a refraction direction after the three-dimensional image parallel light is refracted by a negative refractive index plate.

Optionally, the control module 2602 is further configured to emit, by means of the three-dimensional display, first three-dimensional image parallel light corresponding to three-dimensional object data and second three-dimensional image parallel light corresponding to motion area display data in the display direction. A three-dimensional object is formed at the imaging position along the refraction direction after the first three-dimensional image parallel light is refracted by the negative refractive index plate. A three-dimensional motion area is formed at the imaging position along the refraction direction after the second three-dimensional image parallel light is refracted by the negative refractive index plate.

Optionally, the acquisition module 2601 is further configured to obtain suspended particle data.

Optionally, the control module 2602 is further configured to emit, by means of the three-dimensional display, third three-dimensional image parallel light corresponding to the suspended particle data in the display direction. A semitransparent particle suspended above the three-dimensional motion area is formed at the imaging position along the refraction direction after the third three-dimensional image parallel light is refracted by the negative refractive index plate.

Optionally, the acquisition module 2601 is further configured to obtain annular diffusion data.

Optionally, the control module 2602 is further configured to emit, by means of the three-dimensional display, fourth three-dimensional image parallel light corresponding to the annular diffusion data in the display direction, and at least one of an annular diffusion image or an annular rotary image is formed at the imaging position along the refraction direction after the fourth three-dimensional image parallel light is refracted by the negative refractive index plate.

Optionally, the acquisition module 2601 is further configured to obtain annular halo data.

Optionally, the control module 2602 is further configured to emit, by means of the three-dimensional display, fifth three-dimensional image parallel light corresponding to the annular halo data in the display direction, and a halo is formed at the imaging position along the refraction direction after the fifth three-dimensional image parallel light is refracted by the negative refractive index plate. The halo surrounds the three-dimensional object above the three-dimensional motion area.

Optionally, the acquisition module 2601 is further configured to obtain particle trajectory data.

Optionally, the control module 2602 is further configured to emit, by means of the three-dimensional display, sixth three-dimensional image parallel light corresponding to the particle trajectory data in the display direction, and a movement trajectory is formed at the imaging position along the refraction direction after the sixth three-dimensional image parallel light is refracted by the negative refractive index plate. The movement trajectory is based on a moving part of the three-dimensional object.

Optionally, the acquisition module 2601 is further configured to obtain dynamic stepping data.

Optionally, the control module 2602 is further configured to emit, by means of the three-dimensional display seventh three-dimensional image parallel light corresponding to the dynamic stepping data in the display direction, and an annular diffusion image is formed at the imaging position along the refraction direction after the seventh three-dimensional image parallel light is refracted by the negative refractive index plate. The annular diffusion image is based on a stepping position of a foot of the three-dimensional object above the three-dimensional motion area.

Optionally, as shown in FIG. 26, the apparatus 2600 further includes an interaction module 2603.

The interaction module 2603 is configured to: recognize a gesture action through a gesture capture camera; update first image data based on the gesture action, to obtain second image data; emit, by means of the three-dimensional display, three-dimensional image parallel light corresponding to the second image data in the display direction; and form a second holographic stereoscopic image at the imaging position along the refraction direction after the three-dimensional image parallel light corresponding to the second image data is refracted by a negative refractive index plate.

The interaction module 2603 is further configured to: update, when the gesture action is the first sliding action, first clothing data corresponding to the three-dimensional object in the first image data to second clothing data to obtain second image data; or update, when the gesture action is a second sliding action, a first display angle of the three-dimensional object in the first image data to a second display angle along a sliding direction to obtain second image data; or add, when the gesture action is a double-fist gesture action, first interaction data to the first image data to obtain second image data, the first interaction data being data used for indicating interaction between the three-dimensional object and an interactive object on double fists which is performed following a music melody; or add, when the gesture action is a heart-shaped finger action, second interaction data to the first image data to obtain second image data, the second interaction data being data used for indicating interaction between the three-dimensional object and a heart-shaped image.

In this embodiment, the device for generating a holographic stereoscopic image includes the body 101, the three-dimensional display 102, and the negative refractive index plate 103. The body 101 includes the first cavity 105 and the second cavity 106. A bending angle exists between a central axis of the first cavity 105 and a central axis of the second cavity 106. A second end 302 of the first cavity 105 is in communication with a first end 303 of the second cavity 106. The three-dimensional display 102 is arranged on the first end 301 of the first cavity 105, and the negative refractive index plate 103 is arranged between the second end 302 of the first cavity 105 and the first end 303 of the second cavity 106. The display direction of the three-dimensional display 102 faces the negative refractive index plate 103. Therefore, the light emitted by the three-dimensional display 102 may be refracted from the first cavity to the second cavity by the negative refractive index plate 103. However, an opening is formed by the second end 304 of the second cavity 106 on the side wall of the body 101, and the refraction direction of the negative refractive index plate 103 faces the opening, so that the refracted light can reach the opening, and the holographic stereoscopic image can be formed at the imaging position of the opening. Through the device provided in this disclosure, the holographic stereoscopic image can be automatically and quickly generated, which improves the efficiency of generating the holographic stereoscopic image, and also reducing the energy consumption for generating the holographic stereoscopic image.

Further, in this embodiment, the first holographic stereoscopic image is formed at the imaging position by combining the three-dimensional display with the negative refractive index plate. The first holographic stereoscopic image viewed from a side can still present a three-dimensional visual effect, which enhances the stereoscopic effect and sense of reality of the holographic image, and breaks the barrier between the holographic image and the user. In this way, the user can exactly see the first holographic stereoscopic image having the three-dimensional visual effect in the physical space.

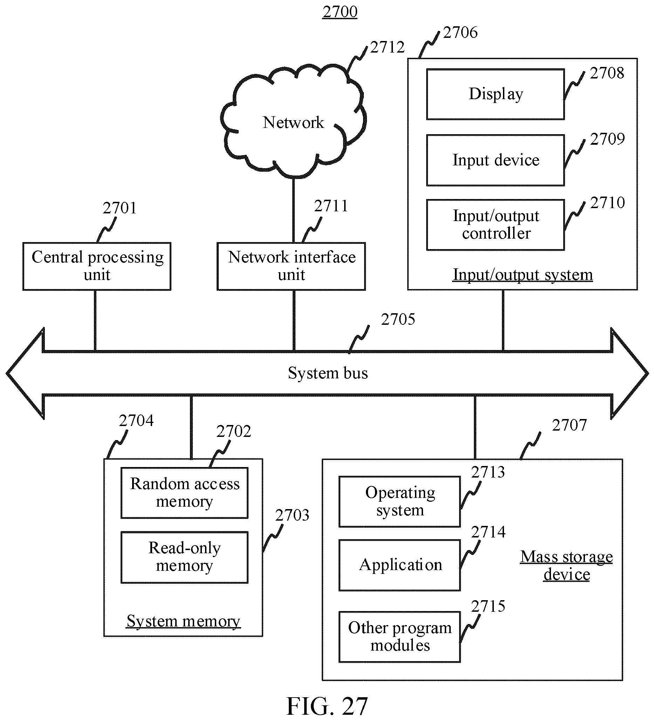

FIG. 27 is a schematic structural diagram of a computer device according to an embodiment of this disclosure. Specifically, the computer device 2700 includes a central processing unit (CPU) 2701, a system memory 2704 including a random access memory (RAM) 2702 and a read-only memory (ROM) 2703, and a system bus 2705 connecting the system memory 2704 to the CPU 2701. The computer device 2700 further includes a basic input/output system (I/O system) 2706 configured to transmit information between components in a computer, and a mass storage device 2707 configured to store an operating system 2713, an application program 2714, and another program module 2715.

The basic I/O system 2706 includes a display 2708 configured to display information, and an input device 2709 configured to allow a user to enter information, for example, a mouse, or a keyboard. The display 2708 and the input device 2709 are both connected to the CPU 2701 by using an input/output controller 2710 connected to the system bus 2705. The basic input/output system 2706 may further include the input/output controller 2710 configured to receive and process input from multiple other devices such as the keyboard, the mouse, or an electronic stylus. Similarly, the input/output controller 2710 further provides an output to a display screen, a printer, or another type of output device.

The mass storage device 2707 is connected to the CPU 2701 by using a mass storage controller connected to the system bus 2705. The mass storage device 2707 and a computer-readable medium associated with the large-capacity storage device provide non-volatile storage to the computer device 2700. That is, the mass storage device 2707 may include a computer-readable medium such as a hard disk or a compact disc read-only memory (CD-ROM) drive.

Generally, the computer-readable medium may include a computer storage medium and a communication medium. The computer storage medium includes volatile and non-volatile, removable and non-removable media that are configured to store information such as computer-readable instructions, data structures, program modules, or other data and that are implemented by using any method or technology. The computer storage medium includes a RAM, a ROM, an erasable programmable ROM (EPROM), an electrically erasable programmable ROM (EEPROM), a flash memory or another solid-state memory technology, a CD-ROM, a digital versatile disc (DVD) or another optical memory, a tape cartridge, a magnetic cassette, a magnetic disk memory, or another magnetic storage device. Certainly, a person skilled in the art may know that the computer storage medium is not limited to the foregoing types. The foregoing system memory 2704 and mass storage device 2707 may be collectively referred to as a memory.

According to the embodiments of this disclosure, the computer device 2700 may further be connected, through a network such as the Internet, to a remote computer on the network and run. That is, the computer device 2700 may be connected to a network 2712 by using a network interface unit 2711 connected to the system bus 2705, or may be connected to another type of network or a remote computer system by using a network interface unit 2711.

A controller is provided. The controller includes a processor and a memory, the memory storing at least one instruction, the instruction being loaded and executed by the processor to implement the foregoing method for generating a holographic stereoscopic image.

A computer-readable storage medium is provided. The computer-readable storage medium stores at least one program code, the program code being loaded and executed by a processor to implement the foregoing method for generating a holographic stereoscopic image.

A computer program product or a computer program is provided. The computer program product or the computer program includes computer instructions, the computer instructions being stored in a computer-readable storage medium. A controller reads the foregoing computer instructions from the foregoing computer-readable storage medium, and the foregoing controller executes the foregoing computer instructions, to cause the foregoing device configured to generate a holographic stereoscopic image to perform the foregoing method for generating a holographic stereoscopic image.

It is to be understood that "multiple" mentioned in the specification means two or more. And/or describes an association relationship for describing associated objects and represents that three relationships may exist. For example, A and/or B may represent the following three cases: Only A exists, both A and B exist, and only B exists. The character "/" generally indicates an "or" relationship between the associated objects.

A person of ordinary skill in the art may understand that all or some of the steps of the foregoing embodiments may be implemented by hardware, or may be implemented by a program instructing relevant hardware. The program may be stored in a computer-readable storage medium. The storage medium may be a read-only memory, a magnetic disk, an optical disc, or the like.

The foregoing descriptions are merely exemplary embodiments of this disclosure, and are not intended to limit this disclosure. Any modification, equivalent replacement, improvement and the like made within the spirit and principle of this disclosure shall fall within the protection scope of this disclosure.

**Claims**

1. A device (100) for generating a holographic stereoscopic image, the device (100) comprising a body (101), a three-dimensional display (102), and a negative refractive index plate (103),

   the body (101) comprising a first cavity (105) and a second cavity (106);
   a bending angle existing between a central axis of the first cavity (105) and a central axis of the second cavity (106);
   a second end (302) of the first cavity (105) being in communication with a first end (303) of the second cavity (106), and an opening being formed by a second end (304) of the second cavity (106) on a side wall of the body (101);
   the three-dimensional display (102) being arranged on a first end (301) of the first cavity (105), and the negative refractive index plate (103) being arranged between the second end (302) of the first cavity (105) and the first end (303) of the second cavity (106); and
   a display direction of the three-dimensional display (102) facing the negative refractive index plate (103), and a refraction direction of the negative refractive index plate (103) facing the opening.

2. The device (100) according to claim 1, wherein

   the first cavity (105) is a first cubic cavity formed in a vertical direction, a cross-sectional size of the first cubic cavity matching a display size of the three-dimensional display (102); and
   the second cavity (106) is a second cubic cavity formed in a transverse direction, a longitudinal section size of the second cubic cavity matching a display size of the three-dimensional display (102).

3. The device (100) according to claim 2, wherein an included angle between the display direction of the three-dimensional display (102) and the refraction direction of the negative refractive index plate (103) is 90 degrees.

4. The device (100) according to any one of claims 1 to 3, further comprising a physical display interface, and
   the physical display interface being electrically connected to the three-dimensional display (102).

5. The device (100) according to any one of claims 1 to 3, further comprising a gesture capture camera (104), and
   a shooting direction of the gesture capture camera (104) facing an imaging position corresponding to a refracted light of the negative refractive index plate (103).

6. The device (100) according to claim 5, wherein

the imaging position is outside the body (101), and the gesture capture camera (104) is arranged outside the body (101).

7. The device (100) according to claim 5, wherein the imaging position is in the second cavity (106), and the gesture capture camera (104) is arranged on a cavity wall of the second cavity (106).

8. The device (100) according to claim 5, further comprising a physical camera interface, and the physical camera interface being electrically connected to the gesture capture camera (104).

9. The device (100) according to claim 3, wherein

an included angle between the display direction of the three-dimensional display (102) and a plate surface of the negative refractive index plate (103) is a first included angle; an included angle between the refraction direction of the negative refractive index plate (103) and the plate surface of the negative refractive index plate (103) is a second included angle; and a ratio of a cosine value of the first included angle to a cosine value of the second included angle is equal to an opposite number of a refractive index of the negative refractive index plate (103).

10. A method for generating a holographic stereoscopic image, performed by a controller, the controller being configured to control the device according to any one of claims 1 to 9, the method comprising:

obtaining first image data corresponding to a first holographic stereoscopic image; and emitting, by means of the three-dimensional display, three-dimensional image parallel light corresponding to the first image data in the display direction, the first holographic stereoscopic image being formed at an imaging position along the refraction direction after the three-dimensional image parallel light is refracted by the negative refractive index plate.

11. The method according to claim 10, wherein the first image data comprises three-dimensional object data and motion area display data; and the emitting, by means of the three-dimensional display, three-dimensional image parallel light corresponding to the first image data in the display direction comprises:

emitting, by means of the three-dimensional display, first three-dimensional image parallel light corresponding to the three-dimensional object data and second three-dimensional image parallel light corresponding to the motion area display data in the display direction, a three-dimensional object being formed at the imaging position along the refraction direction after the first three-dimensional image parallel light is refracted by the negative refractive index plate, and a three-dimensional motion area being formed at the imaging position along the refraction direction after the second three-dimensional image parallel light is refracted by the negative refractive index plate.

12. The method according to claim 11, wherein the first image data comprises suspended particle data; and the method further comprises:
emitting, by means of the three-dimensional display, third three-dimensional image parallel light corresponding to the suspended particle data in the display direction, a semitransparent particle suspended above the three-dimensional motion area being formed at the imaging position along the refraction direction after the third three-dimensional image parallel light is refracted by the negative refractive index plate.

13. The method according to claim 11, wherein the first image data comprises annular diffusion data; and the method further comprises:
emitting, by means of the three-dimensional display, fourth three-dimensional image parallel light corresponding to the annular diffusion data in the display direction, at least one of an annular diffusion image or an annular rotary image being formed at the imaging position along the refraction direction after the fourth three-dimensional image parallel light is refracted by the negative refractive index plate.

14. The method according to claim 11, wherein the first image data comprises annular halo data; and the method further comprises:
emitting, by means of the three-dimensional display, fifth three-dimensional image parallel light corresponding to the annular halo data in the display direction, a halo being formed at the imaging position along the refraction direction after the fifth three-dimensional image parallel light is refracted by the negative refractive index plate; and the halo surrounding the three-dimensional object above the three-dimensional motion area.

15. The method according to claim 11, wherein the first image data comprises particle trajectory data; and the method further comprises:
emitting, by means of the three-dimensional display, sixth three-dimensional image parallel light corresponding to the particle trajectory data in the display direction, a movement trajectory being formed at the imaging position along the refraction direction after the sixth three-dimensional image parallel light is refracted by the negative refractive index plate; and the movement trajectory being based on a moving part of the three-dimensional object.

16. The method according to claim 11, wherein the first image data comprises dynamic stepping data; and the method further comprises:
emitting, by means of the three-dimensional display, seventh three-dimensional image parallel light corresponding to the dynamic stepping data in the display direction, an annular diffusion image being formed at the imaging position along the refraction direction after the seventh three-dimensional image parallel light is refracted by the negative refractive index plate; and the annular diffusion image being based on a stepping position of a foot of the three-dimensional object above the three-dimensional motion area.

17. The method according to claim 11, wherein the device further comprises a gesture capture camera, and the method further comprises:

recognizing a gesture action by means of the gesture capture camera;
updating the first image data based on the gesture action, to obtain second image data; and
emitting, by means of the three-dimensional display, three-dimensional image parallel light corresponding to the second image data in the display direction, a second holographic stereoscopic image being formed at the imaging position along the refraction direction after the three-dimensional image parallel light corresponding to the second image data is refracted by the negative refractive index plate.

18. The method according to claim 17, wherein the first image data comprises the three-dimensional object; and
the updating the first image data of the holographic stereoscopic image based on the gesture action, to obtain second image data comprises:
updating first clothing data, corresponding to the three-dimensional object, in the first image data to second clothing data in a case that the gesture action is a first sliding action, to obtain the second image data, the first sliding action being configured to trigger updating of clothing of the three-dimensional object.

19. The method according to claim 17, wherein the first image data comprises the three-dimensional object; and
the updating the first image data of the holographic stereoscopic image based on the gesture action, to obtain second image data comprises:
updating a first display angle of the three-dimensional object in the first image data to a second display angle along a sliding direction in a case that the gesture action is a second sliding action, to obtain the second image data, the second sliding action being configured to trigger updating of the display angle of the three-dimensional object.

20. The method according to claim 17, wherein the first image data comprises the three-dimensional object; and
the updating the first image data of the holographic stereoscopic image based on the gesture action, to obtain second image data comprises:
adding first interaction data to the first image data in a case that the gesture action is a double-fist gesture action, to obtain the second image data, the first interaction data being data used for indicating interaction between the three-dimensional object and an interactive object on double fists which is performed following a music melody.

21. The method according to claim 17, wherein the first image data comprises the three-dimensional object; and
the updating the first image data of the holographic stereoscopic image based on the gesture action, to obtain second image data comprises:
adding second interaction data to the first image data to obtain the second image data in a case that the gesture action is a heart-shaped finger action, the second interaction data being data used for indicating interaction between the three-dimensional object and a heart-shaped image.

22. An apparatus for generating a holographic stereoscopic image, applied to the device according to any one of claims 1 to 9, the apparatus comprising:

an acquisition module, configured to obtain first image data corresponding to a first holographic stereoscopic image; and
a control module, configured to emit, by means of a three-dimensional display, three-dimensional image parallel light corresponding to the first image data in a display direction of the three-dimensional display, the first holographic stereoscopic image being formed at an imaging position along a refraction direction after the three-dimensional image parallel light is refracted by the negative refractive index plate.

23. A controller, the controller comprising a processor and a memory, the memory storing at least one instruction, and the instruction being loaded and executed by the processor to implement the method for generating a holographic stereoscopic image according to any one of claims 10 to 21.

**24.** A computer-readable storage medium, the computer-readable storage medium storing at least one program code, and the program code being loaded and executed by a processor to implement the method for generating a holographic stereoscopic image according to any one of claims 10 to 21.

**25.** A computer program product or a computer program, the computer program product or the computer program comprising computer instructions, the computer instructions being stored in a computer-readable storage medium, a controller reading the computer instructions from the computer-readable storage medium, and the controller executing the computer instructions, to cause a device for generating a holographic stereoscopic image to perform the method for generating a holographic stereoscopic image according to any one of claims 10 to 21.

Device  100

110

101

104

FIG. 1

100

101

106

110

103

109

105

104

102

107

108

FIG. 2

FIG. 3

FIG. 4

FIG. 5

| 601 |
|---|
| Obtain first image data corresponding to a first holographic stereoscopic image |

| 602 |
|---|
| Emit three-dimensional image parallel light corresponding to the first image data in a display direction through a three-dimensional display |

| 603 |
|---|
| Form the first holographic stereoscopic image at an imaging position along a refraction direction after the three-dimensional image parallel light is refracted by a negative refractive index plate |

FIG. 6

FIG. 7

FIG. 8

FIG. 9

FIG. 10

1101

FIG. 11

1201

FIG. 12

FIG. 13

FIG. 14

1501

FIG. 15

1601

FIG. 16

1701

FIG. 17

FIG. 18

1901

FIG. 19

| | 2001 |
|---|---|
| Recognize a gesture action through a gesture capture camera | |

| | 2002 |
|---|---|
| Update first image data based on the gesture action, to obtain second image data | |

| | 2003 |
|---|---|
| Emit three-dimensional image parallel light corresponding to the second image data in a display direction through a three-dimensional display | |

| | 2004 |
|---|---|
| Form a second holographic stereoscopic image at an imaging position along a refraction direction after the three-dimensional image parallel light corresponding to the second image data is refracted by a negative refractive index plate | |

FIG. 20

FIG. 21

FIG. 22

FIG. 23

FIG. 24

FIG. 25

FIG. 26

<u>2700</u>

2712

2706

Network

Display 2708

Input device 2709

Input/output
controller 2710

<u>Input/output system</u>

2701

Central processing
unit

2711

Network interface
unit

2705

System bus

2704

2702

Random access
memory

Read-only
memory

<u>System memory</u>

2703

2707

Operating
system 2713

Application 2714

<u>Mass storage
device</u>

Other program
modules 2715

FIG. 27

## INTERNATIONAL SEARCH REPORT

| International application No. |
| --- |
| **PCT/CN2021/130876** |

**A. CLASSIFICATION OF SUBJECT MATTER**

G03H 1/22(2006.01)i; G02B 30/00(2020.01)i

According to International Patent Classification (IPC) or to both national classification and IPC

**B. FIELDS SEARCHED**

Minimum documentation searched (classification system followed by classification symbols)

G03H G02B

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT: 全息, 投影, 负折射率, 反射, 膜, 三维, 立体, 浮动, 悬浮, 3D, project, hologram, reflect, solid, three dimensional, suspend, negative refraction

**C. DOCUMENTS CONSIDERED TO BE RELEVANT**

| Category* | Citation of document, with indication, where appropriate, of the relevant passages | Relevant to claim No. |
| --- | --- | --- |
| Y | KR 101390822 B1 (HIGH TECHNOLOGY CO LTD S et al.) 30 April 2014 (2014-04-30) description, paragraphs [0006]-[0029], and figures 1-4 | 1-25 |
| Y | CN 110471249 A (JINGMEN TANMENG TECHNOLOGY CO., LTD.) 19 November 2019 (2019-11-19) description, paragraphs [0005]-[0071], and figures 1 and 2 | 1-25 |
| Y | JP 2005010226 A (DENSO CORP.) 13 January 2005 (2005-01-13) description, paragraphs [0011]-[0076], and figures 1-16 | 1-25 |
| A | KR 20200082083 A (SWIS CO LTD) 08 July 2020 (2020-07-08) entire document | 1-25 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 January 2022** | **09 February 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/130876**

| Patent document cited in search report | | | Publication date (day/month/year) | Patent family member(s) | | | Publication date (day/month/year) |
|---|---|---|---|---|---|---|---|
| KR | 101390822 | B1 | 30 April 2014 | None | | | |
| CN | 110471249 | A | 19 November 2019 | CN | 211293599 | U | 18 August 2020 |
| | | | | WO | 2021052104 | A1 | 25 March 2021 |
| JP | 2005010226 | A | 13 January 2005 | DE | 102004028711 | A1 | 24 February 2005 |
| KR | 20200082083 | A | 08 July 2020 | KR | 102281864 | B1 | 26 July 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011552968